# EUROPÄISCHE PATENTANMELDUNG

(11) **EP 4 653 396 A1**
(43) Veröffentlichungstag der Anmeldung: **26.11.2025**
(21) Anmeldenummer: 25177881.7
(22) Anmeldetag: 21.05.2025
(51) Int. Cl.: C02F 1/461, C02F 1/469, C02F 1/00, C02F 101/10, C02F 101/12, C02F 101/16, C02F 103/10

(54) **VERFAHREN ZUR ABTRENNUNG VON KATIONEN UND ANIONEN AUS SULFAT- UND HALOGENIDHALTIGEN WÄSSERN**

(30) Priorität: 22.05.2024 DE 102024114313
(71) Anmelder: Fraunhofer-Gesellschaft zur Förderung der angewandten Forschung e.V., 80686 München (DE)
(72) Erfinder: Friedrich, Hans-Jürgen, 01277 Dresden (DE)
(74) Vertreter: Pfenning, Meinig & Partner mbB

(57) **Zusammenfassung**

Die Erfindung betrifft ein Verfahren zur Abtrennung von Anionen und Kationen aus sauren Wässern oder sulfat- und/oder halogenidionen enthaltendem Wässern. Hierbei werden diese Wässer in einer ersten Stufe einer Elektrolyse unterzogen und Anionen und Kationen abgetrennt. Allerdings erfolgt vor oder während der Durchführung der ersten Stufe keine Zugabe von Kohlenstoffdioxid in diese Wässer erfolgt. Nach erfolgter Elektrolyse in der ersten Stufe wird in einer zweiten Stufe eine weitere Elektrolyse durchgeführt, wobei Anionen und abgetrennt werden und ggf. vorhandene Kationen hydrolysiert und nachfolgend ausgefällt werden. Vor, während und/oder nach der Durchführung der zweiten Stufe wird Kohlenstoffdioxid in die erste Lösung aufgegeben.

## Beschreibung

Die Erfindung betrifft ein Verfahren zur Abtrennung von Kationen und Anionen aus schwefelsauren, salzsauren Wässern oder sulfat- und/oder halogenidionen enthaltendem Wässern.

Schwefelsaure Wässer entstehen meist, aber nicht ausschließlich durch die Einwirkung natürlicher Verwitterungsprozesse auf sulfidische Minerale, wobei vorwiegend schwefelsaure, Schwermetallkationen enthaltende Wässer gebildet werden, für die neben einer hohen nicht-Carbonathärte und Salinität ein fehlendes Puffervermögen im Neutralbereich der pH-Wertskala kennzeichnend ist. Zusätzlich enthalten diese Wässer häufig auch andere Metallkationen und Anionen, wie Chlorid, Fluorid, Nitrat oder Anionen des Arsens in unterschiedlicher Konzentration. Wässer dieses Ursprungs kommen vor allem in Bergbaugebieten und als Industrieabwässer aus verschiedensten Anwendungen sehr häufig und umfangreich vor (Volumenströme bis zu 100 Mio m³/a sind bekannt) und stellen dort ein großes Umweltproblem dar, da die Einleitung solcher Wässer in die Vorflut sowohl wegen der Schwermetallgehalte als auch wegen des niedrigen pH-Wertes und hoher Salinität, insbesondere hoher Sulfatkonzentrationen in hohem Maße unerwünscht und zumeist auch rechtlich unzulässig ist. Das Vorkommen solcher schwefelsaurer Wässer ist aber nicht auf die unmittelbar vom Bergbau betroffenen Gebiete begrenzt. Vielmehr kann es durch natürliche Transportprozesse und/oder Deposition mit dem Niederschlagswasser auch in weit von der Schadstoffquelle entfernten Gebieten zu einer unerwünschten Gewässerversauerung kommen. Ein typisches, aber keinesfalls eingrenzendes Beispiel dafür sind Emissionen aus Anlagen zum Rösten sulfidischer Erze ohne ausreichende Abgasreinigung.

Eine weitere Quelle für solche Wässer sind Oberflächenbehandlungsprozesse, in denen unedle Metalle, d.h. solche, welche in der elektrochemischen Spannungsreihe unedler als Wasserstoff sind, unter Verwendung schwefelsäurehaltiger Lösungen gebeizt, geätzt oder anodisiert werden, wobei ebenfalls schwefelsäurehaltige Metall- und speziell Schwermetallkationen enthaltende Abfalllösungen und Spülwässer entstehen.

Aus vielen Bereichen der chemischen, der Bergbau- und Hüttenindustrie, der Lebensmittelindustrie werden ebenfalls saline, z.T. schwermetallhaltige Abwässer emittiert.

Die bekannten Verfahren zur Behandlung oder zur Entsorgung schwefelsaurer, Schwermetallkationen enthaltender Wässer oder Abfalllösungen mit hoher nicht-Carbonathärte und Salinität lassen sich in folgende drei Gruppen einteilen:
- chemische Neutralisationsverfahren
- biochemische Neutralisationsverfahren
- chemisch-physikalische Behandlungsverfahren.

Die chemischen Neutralisationsverfahren zur Behandlung saurer und/oder schwefelsaurer Wässer oder Abfalllösungen sind dadurch gekennzeichnet, dass zur Anhebung des pH-Wertes alkalische Substanzen, wie Branntkalk, Kalkstein, Dolomit als Pulver, Granulate oder in Form von Suspensionen in das zu behandelnde Wasser oder in die Lösung eingebracht werden und dadurch eine Neutralisation des sauren bzw. schwefelsauren Wassers oder der schwefelsäurehaltigen Lösung bewirkt wird. Hiervon sind insbesondere auch saure Wässer umfasst, deren Acidität durch andere Mineralsäuren hervorgerufen ist (beispielsweise salzsaure Abwässer), speziell auch harte Wässer (>100 mg Ca). Andere alkalische Stoffe, wie Natron- oder Kalilauge, Soda oder Pottasche können auch in gelöster Form in das zu behandelnde Wasser oder in die Lösung eingebracht werden.

Obwohl chemische Neutralisationsverfahren weit verbreitet zur technischen Anwendung gelangen, weisen sie vor dem Hintergrund steigender Anforderungen an die Qualität des aufbereiteten Wassers und an die Nachhaltigkeit umwelttechnischer Verfahren erhebliche Nachteile auf. Eine Verminderung der Sulfatgehalte mittels chemischer Neutralisation ist abgesehen von Verdünnungseffekten nur dann möglich, wenn bei der Neutralisation mittels Calciumhaltiger Neutralisationsmittel das Löslichkeitsprodukt für Calciumsulfat überschritten wird. Dies wiederum bedingt Restgehalte von ca. 2 g/l an Sulfationen, was zur Erreichung behördlich vorgegebener Qualitätszielstellungen oder zur Einhaltung gesetzlich oder in Richtlinien oder Normen vorgeschriebener Grenzwerte häufig nicht ausreichend ist. Bei Einsatz der anderen chemischen Neutralisationsmittel ist eine Verminderung der Sulfatgehalte nicht zu erwarten. Lösliche Bariumverbindungen, mit deren Hilfe eine starke Absenkung der Sulfatkonzentration durch Fällungsprozesse möglich wäre, werden letztlich aus Kostengründen für die Behandlung der genannten Wässer und Lösungen nicht im technischen Maßstab eingesetzt. Die Konzentration von Halogenidionen, insbesondere von Chlorid- und Bromidionen kann durch eine solche Behandlung nicht vermindert werden.

Neben diesen bereits beschriebenen Nachteilen weisen die chemischen Verfahren weiterhin den Nachteil auf, dass eine Erhöhung des Härtegrades und der Salinität - sowie die Einhaltung der Qualitätsnomen bzgl. Salinität - des zu behandelnden Wassers durch den Eintrag zusätzlicher löslicher Ionen erfolgt, was für zahlreiche Verwendungszwecke nachteilig ist. Weiterhin ist die Einbringung einer zusätzlichen Pufferkapazität in das zu behandelnde Wasser nur schwierig zu erreichen, da dies mit einer weiteren unerwünschten Erhöhung des Härtegrades und der Salinität verbunden ist oder aber an der Ausbildung von nicht reaktionsfähigen Deckschichten aus Fällungsprodukten, zumeist bestehend aus hydroxidischen Verbindungen von Aluminium, Eisen und Mangan, auf den in das zu behandelnde schwefelsaure Wasser eingebrachten Neutralisations- und/oder Fällungsmittelpartikeln oder Tröpfchen, scheitert.

Biochemische Neutralisationsverfahren, die auf einer enzymatischen Reduktion der Sulfatanionen unter Verbrauch geeigneter Elektronendonatoren beruhen, bewirken zwar unter bestimmten Randbedingungen eine deutliche Verminderung der Sulfationenkonzentration und sie sind auch prinzipiell geeignet, Pufferkapazität in das zu behandelnde Wasser einzubringen. Sie weisen jedoch andere prinzipielle Nachteile auf, was die praktische Anwendung gegenwärtig noch sehr stark einschränkt. Zunächst müssen, um die Behandlung des schwefelsauren Wassers zu ermöglichen, neben den Bakterienkulturen auch Elektronendonatoren in Form von Substraten wie Methanol, Ethanol, Melasse, Stroh und weiterhin einige essentielle Nährstoffe wie Stickstoff- und Phosphorverbindungen für die Mikroorganismen in das zu behandelnde Wasser eingebracht werden, was aus wasserbehördlicher Sicht zu erheblichen Problemen bei der Genehmigung des Einsatzes solcher Verfahren führen kann/"R. Luckner et. al. "Restlochflutung. Maßnahmen zur Steuerung der Wasserbeschaffenheit in den Bergbaufolgeseen der Lausitz", LMBV, Berlin/Dresden 2003, S.39/. Nach einer Behandlung dürfen die zuvor eingebrachten Stoffe nicht mehr im Wasser enthalten sein. Bei den Mikroorganismen, die die Umsetzung der Sulfationen zu Sulfidionen bewirken, handelt es sich um obligat anaerobe Bakterien. Mithin ist sicherzustellen, dass sich in den zur Wasserbehandlung eingesetzten technischen Systemen keine pathogenen Mikroorganismenarten ansiedeln, von denen zahlreiche ebenfalls als obligat anaerob bekannt sind. Die Bildung von Sulfidionen aus Sulfationen während der Behandlung der schwefelsauren Wässer oder schwefelsäurehaltigen Lösungen setzt voraus, dass in den zu behandelnden Wässern oder Lösungen solche Metallkationen in genügend hoher Konzentration vorliegen, die mit den gebildeten Sulfidionen unter den Anwendungsbedingungen über Fällungsreaktionen quantitativ schwerlösliche Sulfide bilden. Aus einer weiteren Literaturquelle geht hervor, dass dieser Schritt technisch problematisch sein kann und dem behandelten Wasser nachträglich Fällungs- bzw. Oxidationsmittel zur Absättigung bzw. zur Zerstörung der stöchiometrisch nicht abgesättigten stark toxischen Sulfidionen zugesetzt werden müssen/"Entwicklung, Aufbau und Erprobung einer kleintechnischen Versuchsanlage zur Behandlung saurer, sulfatreicher eisenhaltiger Wässer aus dem Brankohlenbergbau mit unterschiedlichen Technologien der Sulfatreduktion und der Biosorption", Abschlussbericht BMBF-Vorhaben, Freiberg 1998/.

Darüber hinaus weisen die bisher bekannten mikrobiologischen Verfahren weitere Nachteile auf. Zunächst ist die mikrobiologische Sulfatreduktion bei häufig anzutreffenden niedrigen pH-Werten < ca. 4,0 gehemmt, so dass besondere Vorkehrungen zum Start des Reduktionsprozesses zu treffen sind. Ferner ist die Stoffwechselaktivität der Mikroorganismen in bekannter Weise von der Umgebungstemperatur abhängig. Insbesondere bei niedrigen Wassertemperaturen, die in den zahlreich anzutreffenden sauren Oberflächenwässern zeitweilig auch Werte von 273 K erreichen kann, kann der Wasserbehandlungsprozess daher zum Erliegen kommen, wenn keine geeigneten Maßnahmen getroffen werden. Dies aber verteuert den Prozess und gestaltet ihn technisch aufwendiger. Und schließlich müssen die bei der Reduktion der Sulfationen gebildeten Reaktionsprodukte, die aus Metallsulfiden bestehen, aus dem zu behandelnden Wasser oder der zu behandelnden Lösung entfernt werden, zumindest aber dauerhaft vor einer Re-Oxidation geschützt werden. Dies erfordert weitere Aufwendungen bei der Anwendung der mikrobiologischen Verfahren. Die Konzentration von Halogenidionen kann durch biochemische Wasserbehandlungsverfahren allerdings nicht vermindert werden.

Auch den bekannten physikalisch-chemischen Behandlungsverfahren ist eine breitere praktische Anwendung bei der Behandlung schwefelsaurer Wässer oder schwefelsäurehaltiger Lösungen bisher versagt geblieben, sofern das Einsatzziel in der Verminderung des Sulfatgehaltes und in der Einbringung von Pufferkapazität bestand. Unter physikalisch-chemischen Behandlungsverfahren sollen dabei Verfahren wie Ionenaustausch, chemische Fällungen, thermische Verfahren, Ultrafiltrationsprozesse und elektrochemische sowie elektrophysikalische Verfahren verstanden werden. Als nachteilig bei diesen Verfahren sind die technisch aufwändige Verfahrensführung, die im Regelfall kostspielige Entsorgung der anfallenden Begleit- und Nebenprodukte in größerem Umfang (wie Konzentrate aus der Umkehrosmose oder aus einer Nanofiltration), Materialprobleme durch Ablagerung von Fällungsprodukten auf technisch wichtigen Anlagenteilen bis hin zum Ausfall der betroffenen Komponenten sowie ein vergleichsweise hoher energetischer Aufwand zu nennen. Letztlich führen diese Nachteile zu hohen Kosten beim Einsatz dieser Verfahren. Es ist nachvollziehbar, dass dieser Aufwand sich umso stärker bemerkbar macht, je größer die Menge des zu behandelnden Wassers ist. Gerade bei den durch die Verwitterung sulfidischer Minerale gebildeten schwefelsauren Wässern erreichen die zu behandelnden Wassermengen oft Größenordnungen zwischen einigen Tausend bis hin zu 100 Mio m³ und Jahr.

In der (Patent)Literatur wurden bereits technische Lösungen beschrieben, auch im Rahmen eigener erteilter Patente. Diese erweisen sich jedoch als nicht ausreichend leistungsfähig, um die neueren Behandlungsanforderungen zu erfüllen, die sich aus der Anwendung der EU-WRRL bzgl. der maximal zulässigen Einleitkonzentrationen in Oberflächenwasserkörper ("Verschlechterungsverbot" nach WHG/Oberflächenwasser-VO) ergeben oder um solche Wässer für höherwertige Anwendungen bis hin zum Trinkwasser und Wasserstofferzeugung nutzbar zu machen. Zudem werden bei den nicht in den eigenen Patenten beschriebenen Verfahren große Mengen entsorgungspflichtiger Rückstände erzeugt.

Probleme dieser Art bestehen weltweit. In Ländern des südlichen Afrika oder in Regionen Südamerikas stellen Bergbauwässer teilweise die einzige in nennenswertem Umfang verfügbare Wasserressource dar.

Zur Behandlung solcher Wässer gibt es eine Vielzahl von Lösungsansätzen, der u.a. in den eigenen Patenten DE 1942402 B4 und DE 10 2004 026 447 B4 (dgl. EU-Patent) beschrieben sind. Im Weiteren wird auf die synoptischen Darstellungen von Bilek (Studie im Auftrag des LfULG) und Wolkersdorfer ("Reinigungsverfahren für Grubenwasser", Springer 2020 und Dr. Christian Hildmann, Dr.-Ing. habil. Felix Bilek, Mario Uhlig, Manja Walko: Reinigungsverfahren sowie wirtschaftliche Bewertung und Selektion der Best-Praxis-Verfahren gegen Acid-Mine-Drainage, Sächsisches Landesamt für Umwelt, Landwirtschaft und Geologie, Dresden 2019). Die abtrennbaren Anionen sind z.B. Sulfat, Chlorid, Bromid, Fluorid, Arsenit, Arsenat und Nitrat.

Nachteile der beschriebenen Verfahren sind folgende:
- Abtrennung vor allem für Sulfat beschrieben (bis 90% im Text benannt, aber Beispiele nur bis ca. 80 % im Beispiel ausgeführt, WRRL-Grenzwerte werden damit nicht erreicht
- CI-Abtrennung (gleiche Zielstellung) ist nur unzureichend möglich
- Das aus DE 10 2004 026 447 bekannte Verfahren ist eigenen Untersuchungen zufolge zur Behandlung stärker saliner Wässer ab bestimmter Konzentration (> 250 mg/l) von Erdalkalikationen nicht geeignet
- vielstufige Behandlung (beschrieben sind bis zu 5 Stufen im Beispiel) und somit eine äußert komplexe und aufwendige Prozessführung
- keine höhere Stromdichten anwendbar
- erforderliche Nachentsalzung und Anwendung von Konvois von unterschiedlichen elektrochem. Verfahren im Verbund werden nicht beschrieben

Insbesondere ist allerdings bei den aus dem Stand der Technik bekannten Verfahren nachteilig, dass das Einleiten von Kohlendioxid, in das zu behandelnde sulfat- und/oder halogenidionenhaltige Wasser der Kathodenraum einer verwendeten Elektrolysezelle durch Fällungsprodukte blockiert sowie eine Perforationen des Separators beobachtet wird.. Es muss im Anschluss eine aufwändige Reinigung erfolgen, das Verfahren hat sich insgesamt als störanfällig und somit nicht als wirtschaftlich erwiesen. Zum Teil wurde beobachtet, dass Elektrolysezellen nach kurzem Betrieb irreparabel geschädigt wurden.

Es besteht somit das Bedürfnis, die aus dem Stand der Technik bekannten Verfahren dahingehend weiter zu entwickeln, dass eine zuverlässig Abtrennung von Anionen bzw. Kationen aus sauren Und/oder salinen und/oder Halogenidionen enthaltenden Abwässern möglich ist.

Diese Aufgabe wird mit den Merkmalen des Patentanspruchs 1 gelöst. Die abhängigen Patentansprüche stellen dabei vorteilhafte Weiterbildungen dar.

Die vorliegende Erfindung betrifft somit ein Verfahren zur Abtrennung von Anionen und Kationen aus sauren, insbesondere schwefelsauren, salzsauren Wässern oder sulfat- und/oder halogenidionen enthaltendem Wässern und/oder aus salinen Abwässern.

In einer ersten Stufe werden diese Wässer in einen Kathodenraum einer mindestens einen Kathodenraum und mindestens einen Anodenraum umfassenden ersten Elektrolysezelle eingeleitet und dort einer Elektrolyse unterzogen, wobei eine erste Lösung erhalten wird. Der mindestens ein Kathodenraum und der mindestens ein Anodenraum sind durch eine Anionenaustauschermembran voneinander getrennt, wobei vorhandene Anionen aus dem mindestens einen Kathodenraum durch die Anionenaustauschermembran in den mindestens einen Anodenraum transportiert und abgetrennt werden und die Kationen hydrolysiert und nachfolgend ausgefällt-werden. Das Ausfällen der Kationen erfolgt dabei im Zuge der Hydrolyse im Kathodenraum der Zelle als Hydroxide (Mg, Al, Fe, Mn usw.). Vor oder während der Durchführung der ersten Stufe erfolgt allerdings keine Zugabe von Kohlenstoffdioxid in diese Wässer. Hierunter wird die externe Zugabe von Kohlenstoffdioxid verstanden, natürlich vorhandenes CO₂ oder die daraus gebildeten Hydrogencarbonationen vor der Elektrolyse zählen nicht hierzu.

Das Strömungsregime im Kathodenraum wird dabei bevorzugt so eingestellt, dass eine Sedimentation im Kathodenraum vermieden wird. Überraschenderweise konnte bei der erfindungsgemäßen Verfahrensführung festgestellt werden, dass eine Sedimentation oder Ablagerung ausgefällter Salze und somit ein Verstopfen und Beschädigen der Elektrolysezelle trotz ansonsten gleicher Verfahrensbedingungen unterbleibt, wenn eine Aufgabe von Kohlenstoffdioxid in die erste Elektrolysestufe unterbleibt.

Nach erfolgter Elektrolyse in der ersten Stufe wird die dort erhaltene erste Lösung die aus dem mindestens einen Kathodenraum der ersten Elektrolysezelle ablaufende Lösung einer zweiten Stufe zugeführt, in der die erste Lösung in einen Kathodenraum einer mindestens einen Kathodenraum und mindestens einen Anodenraum umfassenden zweiten Elektrolysezelle eingeleitet und dort einer Elektrolyse unterzogen wird, wobei eine zweite Lösung erhalten wird, wobei der mindestens eine Kathodenraum und der mindestens eine Anodenraum durch eine Anionenaustauschermembran voneinander getrennt sind, wobei in der ersten Lösung vorhandene Anionen aus dem mindestens einen Kathodenraum durch die Anionenaustauschermembran in den mindestens einen Anodenraum transportiert und abgetrennt werden und ggf. vorhandene Kationen ausgefällt werden, wobei vor, während und/oder nach der Durchführung der zweiten Stufe Kohlenstoffdioxid in die erste Lösung aufgegeben wird.

Kerngedanke des erfindungsgemäßen Verfahrens ist dabei, dass es zumindest zweistufig ausgestaltet ist und über zwei nacheinander folgende elektrochemische Behandlungsstufen verfügt. Kennzeichnendes Merkmal dabei ist, dass vor oder während der Durchführung der ersten Elektrolysestufe keine Aufgabe von Kohlendioxid (bzw. keine Zugabe kohlensäuresaurer Salze wie Hydrogencarbonate oder Carbonate) in die zu elektrolysierende Lösung erfolgt.

Überraschenderweise konnte festgestellt werden, dass bei Befolgung der erfindungsgemäßen Verfahrensführung Ausfällungen in der ersten Elektrolysefällung vermieden werden können, so dass ein quasi kontinuierlicher Betrieb möglich ist. Die beim Verfahren gemäß DE 10 2004 026 447 A1 beschriebenen Nachteile können somit vollständig vermieden werden. Zudem können Abtrenngrade von >99,5 % für Sulfat- und Halogenidionen erreicht werden

Die beim erfindungsgemäßen Verfahren eingesetzten Elektrolysezellen können dabei den identischen Aufbau wie aus der DE 10 2004 026 447 A1 aufweisen. Bezüglich des Aufbaus und der Ausgestaltung der entsprechenden Elektrolysezellen wird auf den Offenbarungsgehalt dieser Druckschrift verwiesen, der auch vollständig mit zum Offenbarungsgehalt der vorliegenden Patentanmeldung gemacht wird.

Das erfindungsgemäße Verfahren kann beispielsweise für die nachfolgenden Zwecke verwendet werden:
- Reinigung halogenid- und sulfathaltiger Bergbau- und Prozesswässer (Kohle- und Erzbergbau, Kalibergbau, chemische Prozessabwässer,
- Erzeugung von Brauch-Prozess- und Trinkwasser auf Basis solcher Wässer
- CO₂-Sequestrierung
- Alternative Ressource zur H₂-Erzeugung.

Gemäß einer bevorzugten Ausführungsform ist vorgesehen, dass die Anionen ausgewählt sind aus der Gruppe bestehend aus Sulfat, Chlorid, Bromid, Fluorid, Arsenit, Arsenat und Nitrat.

Bevorzugte Kationen, die beim erfindungsgemäßen Verfahren abgetrennt werden können, sind beispielsweise ausgewählt aus den Gruppen 1 bis 14 des periodischen Systems der Elemente einschließlich der Seltenen Erden und der Aktiniden.

Insbesondere erfolgt die Aufgabe von Kohlendstoffdioxid zur ersten Lösung vor Aufgabe in die zweite Elektrolysezelle, bevorzugt in einem separaten Kontaktor und/oder in den mindestens einen Kathodenraum der zweiten Elektrolysezelle. Hierbei erfolgt ein weiteres Ausfällen enthaltener Kationen als Carbonate, insbesondere Ca, Ba, Sr (als Carbonate).

Hierbei kann der Kontaktor aus einem zylindrischen Außenrohr mit einer Bodenplatte besteht und aus einem porösem Innenrohr mit einem Porendurchmesser von 10 - 500 µm besteht, bevorzugt 50 - 250 µm, wobei der Innendurchmesser des ersten Rohres zum Außendurchmesser des zweiten Rohres einem Verhältnis von 1,5:1 bis 5:1 entspricht, bevorzugt 1,5:1 bis 2,5 zu 1, wobei die Höhe des Kontaktors dem 8 - 50 -Fachen des Durchmessers des ersten äußeren Rohres entspricht, bevorzugt dem 15 - 25-Fachen, wobei die Länge des porösen Teils des zweiten Rohres 30 - 100% der Länge des äußeren ersten Rohres erreicht und der Zwischenraum zwischen äußerem und inneren Rohr des Kontaktors kontinuierlich von den Lösungen aus den Kathodenräumen der Elektrolysezellen durchströmt wird und aus dem inneren porösem Rohrteil kontinuierlich CO₂ zugeführt wird. Der Porendurchmesser kann z.B. mit einem Messmikroskop gemessen werden (beispielsweise mit einem kommerziell erhältlichem System von Leica, es gehen aber auch wesentlich einfachere mit einer Messskala).

Besonders bevorzugt wird vor, während und nach der Durchführung der zweiten Stufe Kohlenstoffdioxid überstöchiometrisch zugegeben, d. h. hierunter wird verstanden, dass mehr CO₂ zugegeben wird, als zum Erreichen eines neutralen pH-Wertes (pH = 7) erforderlich ist, aber gleichzeitig nicht so viel, dass die Bildung leicht löslicher Hydrogencarbonate speziell des Calciums und des Magnesiums in nennenswertem Umfang erfolgt (dies meint, dass weniger als 20% des ursprünglich enthaltenen Ca zu Ca(HCO₃)₂ reagieren und in Lösung verbleiben.

Besonders bevorzugt wird der pH-Wert der ersten Lösung durch Zugabe von Kohlenstoffdioxid auf einen Wert von 5 bis 8, bevorzugt 6 bis 7 eingestellt.

Besonders bevorzugt wird das erfindungsgemäße Verfahren exakt zweistufig durchgeführt, d. h. es werden keine weiteren Elektrolysestufen, wie im Voranstehenden beschrieben, durchgeführt.

Eine weiter bevorzugte Ausführungsform sieht vor, dass nach Durchführung der zweiten Elektrolysestufe die erhaltene zweite Lösung aus dem mindestens einen Kathodenraum durch die Anionenaustauschermembran in den mindestens einen Anodenraum transportiert und abgetrennt wird, wobei vor oder während der Durchführung der dritten Stufe Kohlenstoffdioxid in die zweite Lösung aufgegeben wird, oder alternativ oder im Anschluss zur ersten oder zur zweiten Stufe einer monopolaren Elektrodialyse oder einer bipolaren Elektrodialyse unterzogen wird. Dieses dreistufige Verfahren ist insbesondere bei der Behandlung von Solen mit > 10 g/l Chlorid- und Sulfatgehalt zum Teil erforderlich.

Alternativ oder im Anschluss zur ersten oder zweiten Stufe ist ebenso eine monopolare Elektrodialyse oder eine dipolare Elektrodialyse zur Behandlung der jeweils erhaltenen, den entsprechenden Elektrolysestufen entnommenen Lösungen zur weiteren Aufreinigung möglich.

Bevorzugte Stromdichten, die bei der Elektrolyse in der ersten, zweiten und sogar dritten Elektrolysezelle verwendet werden, liegen hierbei zwischen 1 bis 200 mA/cm², bevorzugt von 2 bis 120 mA/cm².

Eine weitere vorteilhafte Ausführungsform sieht vor, dass nach Durchführung der ersten, zweiten und/oder dritten Stufe die jeweils erhaltenen ersten, zweiten oder dritten Lösungen einem Sedimentationsbecken zugeführt werden, von dem aus es nach einem Zeitraum von 0,25 - 6 h, bevorzugt 0,5- 2,5 h einer weiteren Elektrolysestufe, einer monopolaren oder einer bipolaren Elektrodialyse zugeführt wird.

Die Kathodenräume der Elektrolysezellen können beispielsweise in Zeitabständen zwischen 8 Stunden und mehreren Tagen (beispielsweise 2, 3, 4, 5 Tagen) mit einer sauren Lösung regeneriert, z.B. gespült und gereinigt werden.

Bei den Elektrolysen können die Produkte Wasserstoff, Sauerstoff und Ammoniumsulfat, Chlor, Salz und Schwefelsäure und Lösungen der Carbonate und Hydrogencarbonate von Natrium und/oder Kalium erhalten werden. Mit dem erfindungsgemäßen Verfahren ist es möglich, dass sowohl Kationen als auch Anionen bis in den Spurenbereich abgereichert werden können.

Die vorliegende Erfindung wird anhand der nachfolgenden Ausführungen und Beispielen näher beschrieben, ohne die Erfindung hierauf zu beschränken.

Bei der DE 10 2004 026 447 A1 wurde festgestellt, dass die Einleitung von CO₂ in den Kathodenraum der ersten Elektrolysezelle, mit dem Ziel dauerhaft hohe Abtrenngrade der Abtrennung von Sulfationen >50 % zu erreichen, dort zur Fällung von carbonatischen Salzen, insbesondere von CaCO₃ führt, was die Spacer und Strömungsverteiler im Kathodenraum der Elektrolysezellen zusetzt und eine gleichmäßige Durchströmung verhindert. Die als Separatoren eingesetzten Anionenaustauschermembranen werden infolge dessen irreversibel geschädigt.

Erfindungsgemäß wurde nunmehr beobachtet, dass CO₂ bei Wässern mit beispielsweise einer Konzentration von Ca- und Mg-Ionen von mehr als 150 mg/l nicht mehr direkt in die Elektrolysezelle eingeleitet werden darf, sondern dass die Aufgabe von Kohlendstoffdioxid zur ersten Lösung vor Aufgabe in die zweite Elektrolysezelle, bevorzugt in einem separaten Kontaktor und/oder in den mindestens einen Kathodenraum der zweiten Elektrolysezelle erfolgt.

Gemäß der erfindungsgemäßen Verfahrensweise wurden die nachfolgenden Beispiele gearbeitet:

### Ausführungsbeispiel 1

Wasser aus einem Bergwerk wird behandelt. Vor dem Einleiten in den Kathodenraum der 1. Elektrolysezelle weist das Wasser folgende hydrochemische Analyse auf (Tabelle 1):

**Tabelle 1**

| Parameter | Maßeinheit | |
|---|---|---|
| pH-Wert | -/- | 2,8 |
| elektr.Leitf. | mS/cm | 5,5 |
| Kb7,0 | mMol/l | 5,2 |
| Chlorid | mg/l | 1.326 |
| Sulfat | | 1.086 |
| Silicium | | 6,58 |
| Natrium | | 2.220 |
| Kalium | | 23 |
| Magnesium | | 56 |
| Calcium | | 443 |
| Lithium | | 0,11 |
| Strontium | | 4,0 |
| Barium | | 0,05 |
| Aluminium | | 0,12 |
| Mangan | | 0,61 |
| Eisen | | 2,36 |
| Cobalt | µg/l | 11,9 |
| Nickel | | 23 |
| Kupfer | | 5,3 |
| Zink | | 53 |
| Cadmium | | <0,15 |
| Arsen | | <1,0 |
| Lanthan | | 0,2 |
| Thorium | | <0,04 |
| Uran | | 0,3 |

Nach Durchlaufen einer ersten Elektrolyse bei einer kathodischen Stromdichte 50 mA/cm² in einer durch eine Anionenaustauschermembran auf Basis eines PVDF-Substrats geteilten Elektrolysezelle bei einem konstanten Durchfluss von 6 l/h wird das behandelte Wasser der ersten Stufe einem zylindrischen, aus konzentrisch angeordneten Rohren bestehenden Kontaktor zugeleitet, um es mit CO₂ zu versetzen. Der pH-Wert des ablaufenden Wassers aus dem Kathodenraum lag bei 11,3. Nach Kontaktierung mit CO₂ im Kontaktor lag dieser noch bei 5,9. Der Kontaktor hatte eine Höhe von 1,0 m. Der Innendurchmesser des äußeren Rohres lag bei 50 mm, der des inneren bei 20 mm. Die Porenweite im porösen Teil des inneren Rohres hat 0,25 mm betragen, die Länge des porösen Rohrteils lag bei 50 cm. Der Kontaktor wird von unten nach oben mit dem gleichen Volumenstrom des Zellenablaufs aus der Kathodenseite der Elektrolysezelle durchströmt wie diese selbst. Der Volumenstrom des CO₂ hat 5 I/h betragen. Nach Passage des Kontaktors wurde das oben aus dem Kontaktor überlaufende Wasser in ein Auffanggefäß geleitet, in dem es im zeitlichen Mittel 6 h lang aufbewahrt wurde. Aus diesem Gefäß wurde das Wasser, aus dem sich Feststoffe abgeschieden hatten (Carbonate von Ca, Sr, Ba, Li, Hydroxide der übrigen Metalle gemäß Tabelle 1 oder als Adsorbate an Hydroxide speziell von Eisen, Mangan und Aluminium) dem Kathodenraum einer zweiten Elektrolyse zugeleitet, in der es bei 40 mA/cm² kathodischer Stromdichte und gleichem Durchfluss wie in der ersten Stufe elektrolysiert wurde. Im Anodenraum zirkulierte in beiden Fällen eine Schwefelsäure, deren Konzentration sich ausgehend von anfänglich 1 g/l stetig erhöhte, wobei die beiden Anodenkreisläufe aus einer gemeinsamen Vorlage gespeist wurden. Anodenseitig gebildetes Chlor wurde aus der Vorlage abgezogen, die Schwefelsäure durch Zugabe von Ammoniakwasser (20%ig) zu Ammoniumsulfat umgesetzt. Ein stöchiometrisch äquivalenter Teil des kathodisch gebildeten Wasserstoffs wurde mit dem abgezogenen Chlorgas katalytisch an einem aus einem platinmetallhaltigem Katalysatornetz bei 250°C zu Chlorwasserstoff umgesetzt und letzteres Gas nachfolgend in einer Vorlage aus Wasser in Form von Chlorwasserstoffsäure aufgefangen. In einer Variante wurde das Chlorgas in eine dritte Elektrolysezelle mit einer Kathode aus platiniertem Titanblech und einer Anode aus einer Ag-Pd-Legierung, an der der zuvor gebildete Wasserstoff oxidiert wurde, in einer sich selbst unterhaltenden elektrochemischen Gesamtreaktion zu Chlorwasserstoffsäure umgesetzt. Es konnte eine Klemmenspannung von 0,82 V gemessen werden.

Nach jeweils 8 - 10 h wurde der Kathodenraum der ersten Elektrolysezelle durch Spülen mit einer Mineralsäure, ausgewählt aus den Säuren Chlorwasserstoffsäure, Salpetersäure, Methansulfonsäure oder mit Mischungen dieser Säuren, wobei die Konzentration der Säuren bei 1 - 6 Mol/l lag, für eine Zeitdauer von 20 min regeneriert. Bei der 2. Elektrolysestufe erfolgt dies in zeitlichen Abständen von 10 - 24 h. Der Versuch wurde über 100 h durchgeführt.

Nach Passage der 2. Elektrolysestufe wurde das ablaufende Wasser in einem weiteren Kontaktor ebenfalls mit CO₂ versetzt, um den pH-Wert des Wassers von 10,9 auf 7,6 zu erniedrigen und in die Vorflut abgeleitet. In diesem Wasser waren die Konzentrationen der Chloridionen auf 80 mg/l vermindert, die der Sulfationen auf 102 mg/l. Die Konzentrationen der Ionen von Ca- und Mg-Ionen lagen im Ablauf der 2. Elektrolysdestufe bei 75 bzw. 35 mg/l. Die Konzentrationen der Ionen von Fe-, Al-, Ni-, Co-, Cu- und Mn-Ionen waren auf <10 µg/l vermindert worden, die der Zinkionen auf <20 µg/l. Die Konzentrationen von Lanthan und Uran sowie von Arsen lagen unter der Nachweisgrenze des zur Analyse verwendeten ICP-MS-Verfahrens (<0,1 µg/l).

### Ausführungsbeispiel 2

Bergbauwasser mit einer hydrochemischen Zusammensetzung gemäß Tabelle 1wurde in einer ersten Elektrolysestufe so behandelt, wie in Ausführungsbeispiel 1 ausgeführt.

Nach Kontaktierung mit CO₂ und Sedimentation der ausgefällten chemischen Verbindungen wurde das so vorbehandelte Wasser einer zweiten Elektrolysestufe zugeführt. Dabei wurde auf den Einsatz des 2. Kontaktors verzichtet und das CO₂ direkt in die Elektrolysezelle entsprechend der Lehre der DE 10 2004 026 447 A1 zugeführt und das so behandelte Wasser direkt in die Vorflut abgeleitet. Die Regeneration in der 2. Elektrolysestufe wurde im Abstand von 6 - 10 h durchgeführt. Bzgl. der Abtrennung der o.g. chemischen Spezies ergaben sich keine Unterschiede.

### Ausführungsbeispiel 3

Bergbauwasser mit einer chemischen Zusammensetzung gemäß Tabelle 2 wurde analog zu Ausführungsbeispiel Nr. 1 einer elektrochemischen Behandlung unterzogen. Im Unterschied zu diesem Beispiel wurde der Durchfluss durch den Kathodenraum auf 3 l/h in beiden Elektrolysestufen eingestellt und die kathodische Stromdichte in der 2. Elektrolysestufe auf 50 mA/cm² erhöht. Der auf den Kontaktor aufgegebene Volumenstrom an CO₂ lag bei 6 l/h.

Im Ablauf des 2. Kontaktors lagen die Konzentrationswerte für Chlorid- und Sulfationen bei jeweils <5 mg/l und damit niedriger als der Wert der Nachweisgrenze der zur Konzentrationsbestimmung eingesetzten ionenchromatografischen Methode. Die Konzentration der Ca-Ionen wurde auf 23 mg/l vermindert, die der Mg-Ionen auf 52 mg/l. Die Konzentrationen der Kationen der übrigen chemischen Elemente lagen bei <10 µg/l, die von Cobalt bei 16 µg/l und die von Uran, Thorium und des Lanthans lagen unter der analytischen Nachweisgrenze. Die der Arsenionen lag bei 5 µg/l, die des Cadmiums bei 1,8 µg/l.

**Tabelle 2 - chemische Analytik der Wasserprobe (Ausgangswerte) gemäß Ausführungsbeispiel 2**

| Parameter | Maßeinheit | |
|---|---|---|
| | | |
| pH-Wert | -/- | 3,36 |
| elektr.Leitf. | mS/cm | 13,45 |
| Ks7,0 | mMol/l | 1,8 |
| Chlorid | mg/l | 3.527 |
| Sulfat | | 2.100 |
| Silicium | | 13,3 |
| Natrium | | 2.550 |
| Kalium | | 26 |
| Magnesium | | 115 |
| Calcium | | 579 |
| Lithium | | 0,24 |
| Strontium | | 4,5 |
| Barium | | 0,07 |
| Aluminium | | 27,8 |
| Mangan | | 4,19 |
| Eisen | | 8,04 |
| Cobalt | µg/l | 229 |
| Nickel | | 387 |
| Kupfer | | 126 |
| Zink | | 1.210 |
| Cadmium | | 521 |
| Arsen | | 20 |
| Lanthan | | 36,9 |
| Thorium | | 1,35 |
| Uran | | 4,1 |

### Ausführungsbeispiel 4

Wasser mit einer chemischen Zusammensetzung gemäß Tabelle 2 wurde elektrochemisch behandelt.

**Tabelle 3 - chemische Zusammensetzung der Wasserprobe gemäß Beispiel 4 vor der Behandlung**

| Parameter | Maßeinheit | |
|---|---|---|
| | | |
| pH-Wert | -/- | 3,56 |
| elektr.Leitf. | mS/cm | 10,86 |
| Ks7,0 | mMol/l | 1,53 |
| Chlorid | mg/l | 2.913 |
| Sulfat | | 1.348 |
| Silicium | | 10,7 |
| Natrium | | 1.850 |
| Kalium | | 23 |
| Magnesium | | 72 |
| Calcium | | 357 |
| Lithium | | 0,19 |
| Strontium | | 2,75 |
| Barium | | 0,04 |
| Aluminium | | 7,5 |
| Mangan | | 1,4 |
| Eisen | | 2,43 |
| Cobalt | µg/l | 63 |
| Nickel | | 115 |
| Kupfer | | 22 |
| Zink | | 266 |
| Cadmium | | 1 |
| Arsen | | 1,3 |
| Lanthan | | 13 |
| Thorium | | 0,2 |
| Uran | | 1,4 |

Die Behandlung in einer ersten und in einer zweiten elektrochemischen Behandlungsstufe erfolgte wie unter Beispiel Nr. 1 beschrieben bei einem kathodischen Durchfluss von 7,5 l/h und einem CO₂-Volumenstrom von 7,5 l/h am ersten und von 5,0 I/h am zweiten Kontaktor. Das aus diesem Kontaktor ablaufende Wasser zeigte eine elektrische Leitfähigkeit von 6,52 mS/cm.

Dieses Wasser wurde anschließend einem Elektrodialysestack mit 2.500 cm² Membranfläche zugeführt, wobei es sich bei diesen Membranen mit je 500 cm² wirksamer, für den Ladungstransport zugänglicher Oberfläche um alternierend angeordnete Membranen vom Anion- bzw. Kationenaustauschertyp auf Grundlage eines Trägermaterials aus PEEK handelte. Der Elektrolysestack war dabei als sog. Dreikreissystem ausgebildet, wobei das aus dem Kontaktor ablaufende und in einem Sedimentationsbehälter gesammelte Wasser das Diluat bildete, das entsalzt wurde. Im Konzentratkreis diente eine NaHCO₃-Lösung der Konzentration 2,5 g/l die Startlösung, deren Gehalt sich im Verlauf der Behandlung immer weiter erhöhte. Im Spülkreislauf, der den elektrischen Kontakt zu den endständigen Elektroden in Form je einer Kathode aus Edelstahlblech des Werkstofftyps 1.4571 und einer Anode aus einem korrosionsbeständigem Werkstoff wie platiniertes Titanblech oder Hastelloy C-276 herstellte. Im Spülkreislauf zirkulierte eine 1 molare Lösung von NaHCO₃. Die Elektrolyse wurde bei einer Stromdichte von 20 mA/cm² und einem Durchfluss des Diluats von 2 l/h betrieben. Im Ablauf des Diluats wurde eine elektrische Leitfähigkeit von 0,63 mS/cm gemessen. Im Konzentratkreislauf erreichte die Konzentration der NaHCO₃-Lösung >2 Mol/I.

### Ausführungsbeispiel 5

Sole aus dem Bergbau mit einer chemischen Zusammensetzung gemäß Tabelle 4 wurde elektrochemisch behandelt.

**Tabelle 5 - chemische Zusammensetzung der Soleprobe gemäß Beispiel 5 vor der Behandlung**

| Parameter | | |
|---|---|---|
| | Maßeinheit | |
| pH-Wert | -/- | 7,25 |
| elektr.Leitf. | mS/cm | 71 |
| Ks7,0 | mMol/l | -0,16 |
| Chlorid | mg/l | 25.776 |
| Sulfat | | 2.619 |
| Silicium | | 5,34 |
| Natrium | | 16.245 |
| Kalium | | 339 |
| Magnesium | | 183 |
| Calcium | | 558 |
| Lithium | | 0,46 |
| Strontium | | 10,7 |
| Barium | | 0,03 |
| Aluminium | | 0,03 |
| Mangan | | 0,12 |
| Eisen | | 2,43 |
| Cobalt | µg/l | 0,4 |
| Nickel | | 4,2 |
| Kupfer | | 5,5 |
| Zink | | 12,4 |
| Cadmium | | <0,01 |
| Arsen | | <1,8 |
| Lanthan | | 0,05 |
| Thorium | | <0,03 |
| Uran | | 0,3 |

Die Sole wurde in einer ersten Behandlungsstufe einer Elektrolyse gemäß Ausführungsbeispiel 1, 1. Stufe der Behandlung unterzogen, wobei der kathodische Volumenstrom bei 1,5 I/h lag.

Ausgehend von der dem 1. Kontaktor nachgeschalteten Sedimentationsbehälter wurde die vorbehandelte wässrige Lösung sodann einer bipolaren Elektrodialysevorrichtung als Diluat zugeführt. Bei dieser Vorrichtung handelte es sich um ein 4-Kreislaufsystem mit doppeltem Diluatkreislauf, den Konzentratkreisläufen für saueres und alkalisches Konzentrat und dem Elektrodenspülkreislauf. Die beiden Konzentratkreisläufe waren durch eine bipolare Membran voneinander getrennt. Der Volumenstrom des Diluats lag bei jeweils 2 l/h, während die anderen Kreisläufe mit einem Volumenstrom von je 6 I/h betrieben wurden. Die Stromdichte lag bei 12 mA/cm². Das aus dem Diluatkreis ablaufende Wasser wies eine elektrische Leitfähigkeit von 0,85 mS/cm auf, im alkalischen Konzentratkreislauf wurde eine Natronlauge der Konzentration 0,9 Mol/ erzeugt, in die nachfolgend CO₂ in einem der beschriebenen Kontaktoren eingeleitet wurde, wodurch der pH-Wert von 13,85 auf 7,3 absank. Diese Lösung wurde erneut in den alkalischen Konzentratkreis gegeben darin weiteres NaOH angereichert. Die Konzentration der erzeugten Salzsäure lag bei 0,91 Mol/I. Als Startlösungen in den Konzentratkreisläufen kamen jeweils Lösungen der Konzentration 1,0 g/l NaOH bzw. HCl zum Einsatz. Die Konzentration der Chloridionen im behandelten Diluat lag bei 150 mg/l, die der Sulfastionen bei 180 mg/l. Die Konzentration der Spurenelemente war wiederum bis in den Spurenbereich erniedrigt worden.

### Ausführungsbeispiel 6:

Grubenwasser, gekennzeichnet durch die nachfolgend genannten Konzentrationwerte von gelösten Ionen und Summenparameter:
Sulfat: 168 mg/l
Fluorid: 6,2 mg/l
Chlorid: 22 mg/l
Eisen: 0,25 mg/l
Mangan: 0,6 mg/l
Arsen: 0,42 mg/l
pH-Wert: 6,8
elektrische Leitfähigkeit: 0,50 mS/cm
Temperatur: 7,5 °C
wurde elektrochemisch wie unter Ausführungsbeispiel Nr. 1, erste Behandlungsstufe behandelt, wobei die kathodische Stromdichte bei 6 mA/cm² lag, der kathodische Volumenstrom bei 12 I/h und der Volumenstrom des CO₂ im Kontaktor bei 1 I/h.

Das am Überlauf des Kontaktors abfließende Wasser wies einen pH-Wert von 6,3 auf bei einer elektrischen Leitfähigkeit von 0,42 ms/cm. Die Konzentrationen von Sulfat- und Chloridionen hatten sich gegenüber dem Ausgangswert um 82 bzw. 86 % vermindert, die der Fluoridionen um 65%. Die Arsenkonzentration lag bei 6 µg/l.

In einer zweiten Ausführungsform der elektrochemischen Behandlung dieses Grubenwassers wurde das CO₂ direkt in den Kathodenraum der Elektrolysezelle eingeleitet. Die Konzentration des Fluorids im ablaufenden Wasser konnte hierdurch auf <1 mg/l vermindert werden.

## Patentansprüche

1. Verfahren zur Abtrennung von Anionen und Kationen aus sauren Wässern oder sulfat- und/oder halogenidionen enthaltendem Wässern,
wobei in einer ersten Stufe diese Wässer in einen Kathodenraum einer mindestens einen Kathodenraum und mindestens einen Anodenraum umfassenden ersten Elektrolysezelle eingeleitet und dort einer Elektrolyse unterzogen werden, wobei eine erste Lösung erhalten wird, wobei der mindestens ein Kathodenraum und der mindestens ein Anodenraum durch eine Anionenaustauschermembran voneinander getrennt sind, wobei vorhandene Anionen aus dem mindestens einen Kathodenraum durch die Anionenaustauschermembran in den mindestens einen Anodenraum transportiert und abgetrennt werden und die Kationen ausgefällt werden, wobei vor oder während der Durchführung der ersten Stufe keine Zugabe von Kohlenstoffdioxid in diese Wässer erfolgt,
und nach erfolgter Elektrolyse in der ersten Stufe die erste Lösung aus dem mindestens einen Kathodenraum der ersten Elektrolysezelle ablaufende Lösung einer zweiten Stufe zugeführt wird, in der die erste Lösung in einen Kathodenraum einer mindestens einen Kathodenraum und mindestens einen Anodenraum umfassenden zweiten Elektrolysezelle eingeleitet und dort einer Elektrolyse unterzogen wird, wobei eine zweite Lösung erhalten wird, wobei der mindestens eine Kathodenraum und der mindestens eine Anodenraum durch eine Anionenaustauschermembran voneinander getrennt sind, wobei in der ersten Lösung vorhandene Anionen aus dem mindestens einen Kathodenraum durch die Anionenaustauschermembran in den mindestens einen Anodenraum transportiert und abgetrennt werden und ggf. vorhandene Kationen hydrolysiert und nachfolgend ausgefällt werden, wobei vor, während und/oder nach der Durchführung der zweiten Stufe Kohlenstoffdioxid in die erste Lösung aufgegeben wird.

2. Verfahren nach Anspruch 1, **dadurch gekennzeichnet, dass** die abgetrennten Anionen ausgewählt sind aus der Gruppe bestehend aus Sulfat, Chlorid, Bromid, Fluorid, Arsenit, Arsenat und Nitrat abgetrennt werden.

3. Verfahren nach einem der vorhergehenden Ansprüche, wobei die Kationen ausgewählt sind aus den Gruppen 1 bis 14 des periodischen Systems der Elemente einschließlich der Seltenen Erden und der Aktiniden.

4. Verfahren nach einem der vorhergehenden Ansprüche, **dadurch gekennzeichnet, dass** die Aufgabe von Kohlendstoffdioxid zur ersten Lösung vor Aufgabe in die zweite Elektrolysezelle, bevorzugt in einem separaten Kontaktor und/oder in den mindestens einen Kathodenraum der zweiten Elektrolysezelle erfolgt.

5. Verfahren nach einem der vorhergehenden Ansprüche, **dadurch gekennzeichnet, dass** der Kontaktor aus einem zylindrischen Außenrohr mit einer Bodenplatte besteht und aus einem porösem Innenrohr mit einem Porendurchmesser von 10 - 500 µm besteht, bevorzugt 50 - 250 µm, wobei der Innendurchmesser des ersten Rohres zum Außendurchmesser des zweiten Rohres einem Verhältnis von 1,5:1 bis 5:1 entspricht, bevorzugt 1,5:1 bis 2,5 zu 1, wobei die Höhe des Kontaktors dem 8 - 50 -Fachen des Durchmessers des ersten äußeren Rohres entspricht, bevorzugt dem 15 - 25-Fachen, wobei die Länge des porösen Teils des des zweiten Rohres 30 - 100% der Länge des äußeren ersten Rohres erreicht und der Zwischenraum zwischen äußerem und inneren Rohr des Kontaktors kontinuierlich von den Lösungen aus den Kathodenräumen der Elektrolysezellen durchströmt wird und aus dem inneren porösem Rohrteil kontinuierlich CO₂ zugeführt wird.

6. Verfahren nach einem der vorhergehenden Ansprüche, **dadurch gekennzeichnet, dass** vor, während, und nach der Durchführung der zweiten Stufe das Kohlendioxid überstöchiometrisch zugegeben wird.

7. Verfahren nach einem der vorhergehenden Ansprüche, **dadurch gekennzeichnet, dass** der pH-Wert der ersten Lösung durch Zugabe von Kohlenstoffdioxid auf einen Wert von 5 bis 8, bevorzugt 6 bis 7 eingestellt wird.

8. Verfahren nach einem der vorhergehenden Ansprüche, **dadurch gekennzeichnet, dass**
das Verfahren exakt zweistufig durchgeführt wird, oder
die zweite Lösung dem mindestens einem Kathodenraum der zweiten Elektrolysezelle entnommen und einer dritten Stufe zugeführt wird, in der die zweite Lösung in einen Kathodenraum einer mindestens einen Kathodenraum und mindestens einen Anodenraum umfassenden dritten Elektrolysezelle eingeleitet und dort einer Elektrolyse unterzogen wird, wobei eine dritte Lösung erhalten wird, wobei der mindestens eine Kathodenraum und der mindestens eine Anodenraum durch eine Anionenaustauschermembran voneinander getrennt sind, wobei in der zweiten Lösung vorhandene Anionen aus dem mindestens einen Kathodenraum durch die Anionenaustauschermembran in den mindestens einen Anodenraum transportiert und abgetrennt werden, wobei vor oder während der Durchführung der dritten Stufe Kohlenstoffdioxid in die zweite Lösung aufgegeben wird, oder
alternativ oder im Anschluss zur ersten oder zur zweiten Stufe einer monopolaren Elektrodialyse oder einer bipolaren Elektrodialyse unterzogen wird.

9. Verfahren nach einem der vorhergehenden Ansprüche, **dadurch gekennzeichnet, dass** bei der Elektrolyse in der ersten, zweiten und/oder dritten Elektrolysezelle eingesetzte Stromdichte von 1 bis 200 mA/cm², bevorzugt von 2 bis 120 mA/cm² eingesetzt wird.

10. Verfahren nach einem der vorgenannten Ansprüche **dadurch gekennzeichnet, dass** nach Durchführung der ersten, zweiten und/oder dritten Stufe die jeweils erhaltenen ersten, zweiten oder dritten Lösungen einem Sedimentationsbecken zugeführt werden, von dem aus es nach einem Zeitraum von 0,25 bis 6 h, bevorzugt 0,5 bis 2,5 h einer weiteren Elektrolysestufe, einer monopolaren oder einer bipolaren Elektrodialyse zugeführt wird.

11. Verfahren nach einem der vorgenannten Ansprüche **dadurch gekennzeichnet, dass** die Kathodenräume der Elektrolysezellen in Zeitabständen zwischen 8 h und mehreren Tagen mit einer sauren Lösung regeneriert werden.

12. Verfahren nach einem der vorgenannten Ansprüche **dadurch gekennzeichnet, dass** bei der elektrochemischen Behandlung die Gase Wasserstoff, Sauerstoff, weiterhin die Stoffe Ammoniumsulfat, Chlor, Salz- und Schwefelsäure und Lösungen der Carbonate und Hydrogencarbonate von Natrium- und/oder Kalium als Koppelprodukte der Behandlung erhalten werden.
